# EUROPÄISCHE PATENTSCHRIFT

(11) **EP 2 912 734 B1**
(45) Veröffentlichungstag und Bekanntmachung des Hinweises auf die Patenterteilung: **01.03.2017**
(21) Anmeldenummer: 13783568.2
(22) Anmeldetag: 28.10.2013
(51) Int. Cl.: H02B 1/01, H02B 1/20

(54) **SCHALTSCHRANK MIT VERBESSERTER MÖGLICHKEIT ZUR ANEINANDERREIHUNG**
ELECTRICAL CABINET WITH IMPROVED POSSIBILITY TO ADD ADJACENT CABINET
ARMOIRE ÉLECTRIQUE AVEC POSSIBILITÉ AMÉLIORÉE D'EXTENSION

(30) Priorität: 26.10.2012 DE 102012110247
(43) Veröffentlichungstag der Anmeldung: 02.09.2015
(73) Patentinhaber: Eaton Industries (Austria) GmbH, 3943 Schrems (AT)
(72) Erfinder: ALTRICHTER, Andreas, A-3830 Waidhofen (AT); SCHERZER, Martin, A-3873 Brand (AT); WEIGL, Franz, A-3961 Waldenstein (AT)
(74) Vertreter: Eaton IP Group EMEA
(86) Internationale Anmeldenummer: PCT/EP2013/072516
(87) Internationale Veröffentlichungsnummer: WO 2014/064289

(56) Entgegenhaltungen:
- EP-A1- 0 866 531
- EP-B1- 1 070 373
- WO-A1-2013/078812
- DE-A1- 19 714 889
- DE-C1- 19 748 555

## Beschreibung

### TECHNISCHES GEBIET

Die Erfindung betrifft einen Schaltschrank mit einer im Wesentlichen quaderförmiger Außenkontur, welcher einen in den besagten Quader eingeschriebenen Rahmen mit mehreren Rahmenprofilen und eine innerhalb des Rahmens zu wenigstens einer von ersten Quaderkanten begrenzten ersten Quaderfläche verlaufende Stromsammelschiene umfasst.

### STAND DER TECHNIK

Schaltschränke der genannten Art sind prinzipiell bekannt und werden häufig eingesetzt. Beispielsweise können mehrere Stromsammelschienen im Schaltschrank quer verlaufen, sodass einerseits elektrische Komponenenten wie Schütze, Steuerungen und dergleichen daran angebunden werden können, andererseits aber auch mehrere Schaltschränke seitlich aneinander gereiht werden können, wenn die zu verbauenden Komponenten nicht in einen Schaltschrank alleine passen. Dazu werden die Stromschienen der einzelnen Schaltschränke untereinander verbunden, sodass sich quer über die gesamte Schaltschrankanordnung verlaufende Stromschienen ergeben, an welche die verschiedenen elektrischen Komponenten angeschlossen werden können.

Ein Beispiel für einen Schaltschrank der genannten Art ist in der EP 1 070 373 B1 offenbart. Nachteilig an den bekannten Schaltschränken ist, dass sie nur sehr umständlich und unter hohem Zeitaufwand aneinander gekoppelt werden können. Der Zugang zur Verbindungsstelle der (Haupt)Stromsammelschienen erfolgt üblicherweise von der Innenseite des Schaltschranks her. Der Innenraum des Schaltschranks ist bestimmungsgemäß aber mit Einbauten versehen, die den nötigen Freiraum zur Zugänglichkeit der Verbindungsstelle stark einschränken können. Genau an der Koppelebene der Schaltschränke befinden sich zudem meist auch die Gerüstrahmen-Holme (Rahmenprofile) des Schaltschränke, welche den Zugang zur Verbindungsstelle, insbesondere auch von der Außenseite her, einschränken beziehungsweise verwehren. Des Weiteren ist bei einer Anordnung der Stromsammelschienen im Bereich des Daches des Schaltschranks die Montage zusätzlich erschwert, da entgegen der Schwerkraft gearbeitet werden muss.

Aus der Druckschrift EP 0866 531 A1 ist ein insbesondere für einen Schaltschrank bestimmtes Metallgestell bekannt. Das Metallgestell besteht aus: senkrechten Längsholmen, die als aus V-Profilen bestehende Stützpfeiler ausgebildet sind, einer ersten Gruppe von waagerechten Traversen, die in der Breitenebene des Schranks parallel zueinander angeordnet sind, einer zweiten Gruppe von Traversen, die in der Tiefenebene des Schranks rechtwinklig zu den Traversen der ersten Gruppe angeordnet sind, sowie Befestigungsmitteln zur Verbindung der genannten Traversen der beiden Gruppen mit den Längsholmen, um ein Gerüst mit rechteckigem Profil zu bilden

### OFFENBARUNG DER ERFINDUNG

Eine Aufgabe der Erfindung ist es daher, einen verbesserten Schaltschrank anzugeben. Insbesondere soll das Aneinanderreihen von Schaltschränken erleichtert werden.

Diese Aufgabe wird mit einem Schaltschrank der eingangs genannten Art gelöst, welcher die Merkmale des Anspruchs 1 aufweist.

"Quer beabstandet" bedeutet im Rahmen der Erfindung, dass das betreffende Rahmenprofil im Bereich der genannten Quaderkante quer zu seiner Längserstreckung beabstandet ist. Mit anderen Worten existiert somit zumindest eine erste Quaderkante, die von keinem Rahmenprofil beziehungsweise Rahmenelement längsseitig berührt wird, beziehungsweise sind die Rahmenprofile gegenüber der besagten Kante quer nach innen versetzt angeordnet. Die Rahmenprofile können beispielsweise abgestuft beziehungsweise abgewinkelt oder insbesondere auch gerade ausgebildet sein. Es kann auch eine erste Quaderkante existieren, von der alle Rahmenprofile vollständig quer beabstandet sind.

Durch die Beabstandung der Rahmenprofile wird der einfache Zugang zur Verbindungsstelle der Stromsammelschiene in der Trennebene zwischen zwei Schaltschränke ermöglicht beziehungsweise erleichtert, insbesondere auch deswegen, weil mit der Schwerkraft gearbeitet werden kann.

Vorteilhafte Ausgestaltungen und Weiterbildungen der Erfindung ergeben sich aus den Unteransprüchen sowie aus der Beschreibung in Zusammenschau mit den Figuren.

Günstig ist es, wenn je ein Rahmenprofil parallel zu je einer Quaderkante ausgerichtet ist oder diese bildet beziehungsweise berührt. Dadurch kann der Schaltschrank besonders leicht hergestellt werden. Durch die vorgeschlagenen Maßnahmen existiert somit zumindest eine erste Quaderkante, von der alle zu dieser Kante parallelen Rahmenprofile beabstandet sind.

Günstig ist es auch, wenn die Stromsammelschiene zwischen der ersten Quaderfläche und einer von zweiten Quaderkanten begrenzten zweiten Quaderfläche verläuft, wobei zumindest eine zweite Quaderkante existiert, von der alle Rahmenprofile zumindest teilweise quer beabstandet sind. Bei dieser Variante verläuft die Stromsammelschiene also zwischen zwei Quaderflächen (also zum Beispiel von links nach rechts), wobei an jeder Quaderfläche wenigstens ein Rahmenprofil nach innen versetzt ist, um den einfachen Zugang zur Verbindungsstelle der Stromsammelschiene in der Trennebene zwischen zwei Schaltschränken zu ermöglichen beziehungsweise zu erleichtern.

Vorteilhaft ist es, wenn das der zumindest einen ersten/zweiten Quaderkante nächst liegende (insbesondere dazu parallele) Rahmenprofil auch von der ersten/zweiten Quaderfläche quer beabstandet ist. Prinzipiell ist es möglich, ein Rahmenprofil in der Trennebene zwischen zwei Schaltschränken nach innen zu versetzen (bei einer vertikalen Trennebene also nach oben beziehungsweise nach unten). Bei dieser Variante des Schaltschranks wird das betreffende Rahmenprofil aber von der Trennebene weg versetzt (bei einer vertikalen Trennebene also nach links beziehungsweise rechts oder nach vorne beziehungsweise nach hinten). Dadurch wird der Zugang zur Verbindungsstelle der Stromsammelschienen weiter vereinfacht. Günstig ist es, wenn das der zumindest einen ersten/zweiten Quaderkante nächst liegende (insbesondere dazu parallele) Rahmenprofil zumindest 5 cm, bevorzugt zumindest 10 cm und weiter bevorzugt zumindest 20 cm von der ersten/zweiten Quaderkante respektive der ersten/zweiten Quaderfläche quer beabstandet ist. Auf diese Weise ist der Zugang zur Verbindungsstelle der Stromsammelschienen mit einem Werkzeug beziehungsweise mit einer Hand gut möglich.

Günstig ist es weiterhin, wenn die Stromsammelschiene normal auf die erste/zweite Quaderfläche ausgerichtet ist. Dadurch wird insbesondere die Aneinanderreihung von mehreren Schaltschränken weiter erleichtert.

Erfindunsgemäss weist der Schaltschrank eine Vielzahl an Stromsammelschienen auf, die von einem quer (und insbesondere normal) zu den Stromsammelschienen ausgerichteten Stromschienenhalter gehalten werden, welcher mit dem der zumindest einen ersten/zweiten Quaderkante nächstgelegenen (insbesondere dazu parallelen) und von der ersten/zweiten Quaderfläche beabstandeten Rahmenprofil verbunden ist oder durch dieses gebildet ist. Durch die vorgeschlagenen Maßnahmen wird der Schaltschrank besonders stabil.

Wenn der Stromschienenhalter von einem Rahmenprofil gebildet ist, ergibt sich insbesondere ein Doppelnutzen des Rahmenprofils.

Vorteilhaft ist auch die Bildung eines Schaltschranksystems, umfassend einen Schaltschrank der genannten Art zusätzlich aufweisend wenigstens ein Verbindungselement, das zur Montage auf einer Stromsammelschiene eingerichtet ist, wobei der Abstand zwischen der zumindest einen ersten/zweiten Quaderkante und dem nächstgelegenen (insbesondere dazu parallelen) und die erste/zweite Quaderfläche berührenden Rahmenprofil wenigstens so groß ist wie die Breite/Höhe des Verbindungselements. Auf diese Weise kann das Verbindungselement gut von der Außenseite des Schaltschranks her auf die Stromsammelschiene aufgesetzt beziehungsweise auf dieser montiert werden.

Vorteilhaft ist auch die Bildung eines Schaltschranksystems, umfassend einen Schaltschrank der genannten Art zusätzlich aufweisend wenigstens ein Verbindungselement, das zur Montage auf einer Stromsammelschiene eingerichtet ist, wobei der Abstand zwischen der zumindest einen ersten/zweiten Quaderkante und dem nächstgelegenen (insbesondere dazu parallelen) und von der ersten/zweiten Quaderfläche beabstandeten Rahmenprofil wenigstens so groß ist wie die halbe Länge des Verbindungselements. Dies ist eine weitere vorteilhafte Variante, bei der das Verbindungselement gut von der Außenseite des Schaltschranks her auf die Stromsammelschiene aufgesetzt beziehungsweise auf dieser montiert werden kann.

Günstig ist es schließlich, wenn das vorgestellte Schaltschranksystem einen weiteren Schaltschrank umfasst, wobei die Schaltschränke des Schranksystems dazu eingerichtet sind, an ihren ersten/zweiten Quaderflächen verbunden zu werden, insbesondere mit Hilfe jener Rahmenprofile, welche diese Quaderflächen bilden/berühren. Beispielsweise können die Rahmenprofile der Schaltschränke miteinander verschraubt sein oder auch mit Hilfe anderer Koppelelemente miteinander verbunden sein.

### KURZE BESCHREIBUNG DER FIGUREN

Die vorliegende Erfindung wird nachfolgend anhand der in den schematischen Figuren der Zeichnung angegebenen Ausführungsbeispiele näher erläutert. Es zeigen dabei:
- Fig. 1: eine schematische Darstellung eines Schaltschranksystems in Schrägansicht;
- Fig. 2: eine Detailansicht des in der Fig. 1 dargestellten Schranksystems schräg von vorne;
- Fig. 3: eine Detailansicht des in der Fig. 1 dargestellten Schranksystems schräg von hinten;
- Fig. 4: eine Schemadarstellung eines Schaltschranks mit zwei auf einer Seite nach innen versetzten Rahmenprofilen;
- Fig. 5: zwei miteinander verbundene Schaltschränke gemäß Fig. 4;
- Fig. 6: eine Schemadarstellung eines Schaltschranks mit einem auf einer Seite nach innen versetzten Rahmenprofil;
- Fig. 7: zwei miteinander verbundene Schaltschränke gemäß Fig. 6;
- Fig. 8: eine Schemadarstellung eines Schaltschranks mit beidseitig nach innen versetzten Rahmenprofilen;
- Fig. 9: zwei miteinander verbundene Schaltschränke gemäß Fig. 8;
- Fig. 10: eine Schemadarstellung eines Schaltschranks mit abgewinkelten und teilweise nach innen versetzten Rahmenprofilen und
- Fig. 11: zwei miteinander verbundene Schaltschränke gemäß Fig. 10.

### DETAILIERTE BESCHREIBUNG DER ERFINDUNG

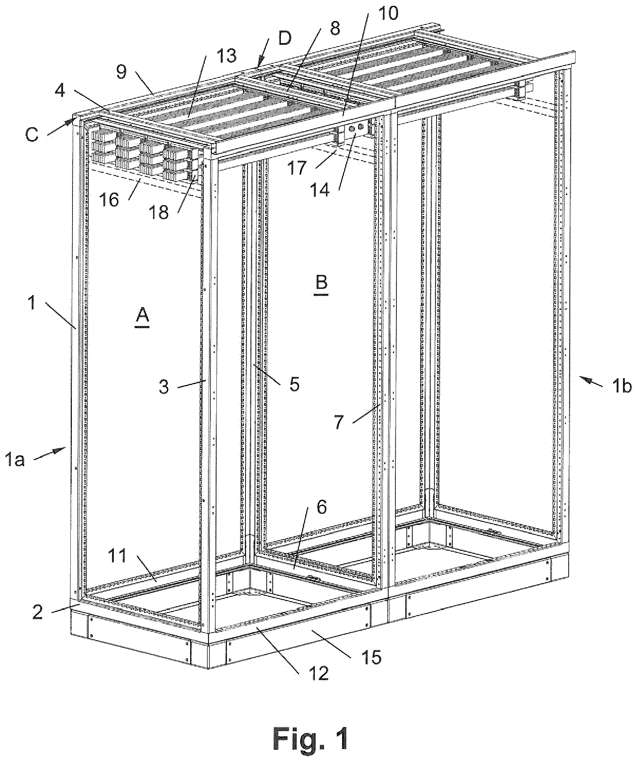

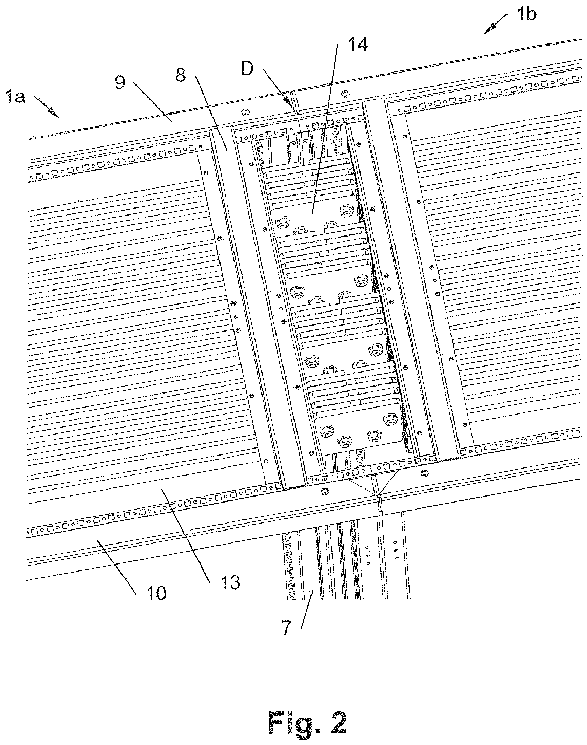

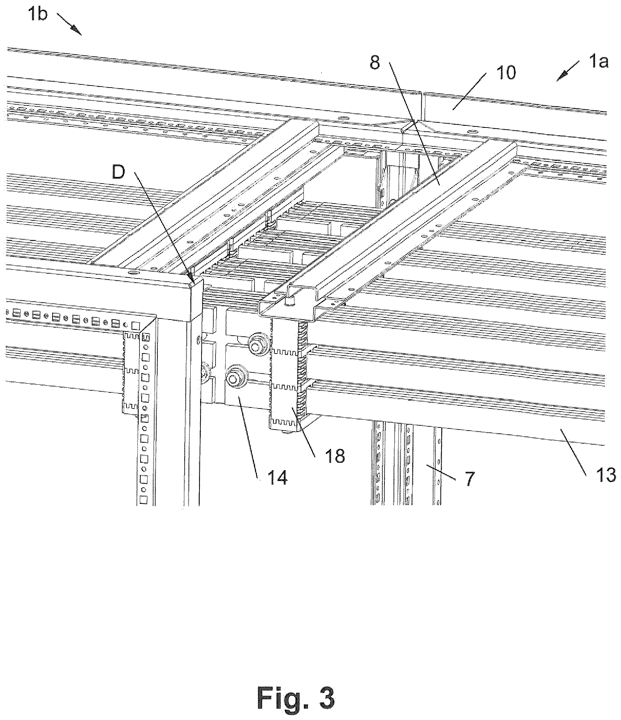

Fig. 1 zeigt zwei Schaltschränke 1a, 1b mit einer im Wesentlichen quaderförmiger Außenkontur in Schrägansicht, die Fig. 2 zeigt eine Detailansicht der Schaltschränke 1a, 1b schräg von vorne, und die Fig. 3 zeigt eine Detailansicht der Schaltschränke 1a, 1b schräg von hinten. Der Schaltschrank 1a umfasst einen in den besagten Quader eingeschriebenen

Rahmen, welcher mehrere Rahmenprofile 1..12 umfasst, und mehrere innerhalb des Rahmens zu wenigstens einer von ersten Quaderkanten begrenzten ersten Quaderfläche A verlaufende Stromsammelschienen 13. Weiterhin umfasst der Schaltschrank 1a einen optionalen Grundrahmen 15. In der genannten Anordnung existiert eine erste Quaderkante C, von der alle Rahmenprofile 1..12 quer beabstandet sind.

Mit anderen Worten existiert somit eine erste Quaderkante C, die von keinem Rahmenprofil 1..12 beziehungsweise Rahmenelement längsseitig berührt wird, beziehungsweise ist das Rahmenprofil 4 gegenüber der besagten Kante C quer nach innen versetzt angeordnet. Das Rahmenprofil 4 ist mit den Rahmenprofilen 9, 10 demzufolge T-förmig verbunden. Auf diese Weise wird der einfache Zugang zur Verbindungsstelle der Stromsammelschienen 13 in der Trennebene zwischen zwei Schaltschränken 1a, 1b ermöglicht beziehungsweise erleichtert.

In dem in der Fig. 1 dargestellten Beispiel ist je ein Rahmenprofil 1..12 parallel zu je einer Quaderkante ausgerichtet oder bildet beziehungsweise berührt diese. Dadurch kann der Schaltschrank 1a besonders leicht hergestellt werden. Durch die vorgeschlagenen Maßnahmen existiert somit eine erste Quaderkante C, von der alle zu dieser Kante parallelen Rahmenprofile 1..12 quer beabstandet sind.

Weiterhin verlaufen die Stromsammelschienen 13 in diesem Beispiel zwischen der ersten Quaderfläche A und einer von zweiten Quaderkanten begrenzten zweiten Quaderfläche B, wobei eine zweite Quaderkante D existiert, von der alle Rahmenprofile 1..12 quer beabstandet sind. Bei dieser Variante verlaufen die Stromsammelschienen 13 also zwischen zwei Quaderflächen A, B (zum Beispiel wie in Fig. 1 dargestellt von links nach rechts), wobei an jeder Quaderfläche A, B wenigstens ein Rahmenprofil 4, 8 nach innen versetzt ist, um den einfachen Zugang zur Verbindungsstelle der Stromsammelschienen 13 in der durch die Quaderflächen A, B gebildeten Trenn- respektive Verbindungsebene zwischen zwei Schaltschränken 1a, 1b zu ermöglichen beziehungsweise zu erleichtern.

Rechts vom Schaltschrank 1a ist ein weiterer (hier identer) Schaltschrank 1b angeordnet, welcher mit dem Schaltschrank 1a verbunden ist. Insbesondere werden die Stromsammelschienen 13 mit Verbindungselementen miteinander verbunden. Konkret werden die Stromsammelschienen 13 im vorliegenden Beispiel mit Verbindungsplatten 14 verschraubt. Solcherart entsteht ein Schaltschranksystem, umfassend einen Schaltschrank 1a und zusätzlich wenigstens ein Verbindungselement 14, das zur Montage auf einer Stromsammelschiene 13 eingerichtet ist.

Das vorgestellte Schaltschranksystem umfasst im konkret dargestellten Beispiel zwei Schaltschränke 1a, 1b, die dazu eingerichtet sind, an ihren ersten/zweiten Quaderflächen A, B verbunden zu werden, insbesondere mit Hilfe jener Rahmenprofile 1..3, 5..7, welche diese Quaderflächen A, B bilden beziehungsweise berühren. Beispielsweise können die Rahmenprofile 1..3, 5..7 der Schaltschränke 1a, 1b miteinander verschraubt sein oder auch mit Hilfe anderer Koppelelemente (z.B. Steckverbinder) miteinander verbunden sein.

Im gezeigten Beispiel ist das der ersten/zweiten Quaderkante C, D nächst liegende und dazu parallele Rahmenprofil 4, 8 auch von der ersten/zweiten Quaderfläche A, B beabstandet. Bei dieser Variante des Schaltschranks 1a wird das betreffende Rahmenprofil 4, 8 also von der Trennebene A, B weg versetzt. Ist diese wie in der Darstellung der Fig. 1 vertikal ausgerichtet, sind die Rahmenprofile 4, 8 also seitlich versetzt. Dadurch wird der Zugang zur Verbindungsstelle der Stromsammelschienen 13 vereinfacht.

Prinzipiell ist es aber auch möglich ein Rahmenprofil 16, 17 in der Trennebene A, B zwischen zwei Schaltschränken 1a, 1b nach innen zu versetzen. Ist diese wie in der Darstellung der Fig. 1 vertikal ausgerichtet, werden die Rahmenprofile 16, 17 vertikal versetzt. Die Rahmenprofile 16, 17 (in der Fig. 1 strichliert dargestellt) können dabei alternativ oder zusätzlich zu den Rahmenprofilen 4, 8 vorgesehen sein.

Bei dem gezeigten Schaltschranksystem ist der Abstand zwischen der ersten/zweiten Quaderkante C, D und dem nächstgelegenen und dazu parallelen von der ersten/zweiten Quaderfläche A, B beabstandeten Rahmenprofil 4, 8 wenigstens so groß ist wie die halbe Länge des Verbindungselements 14. Auf diese Weise kann ein Verbindungselement 14 gut von der Außenseite des Schaltschranks 1a, 1b her auf eine Stromsammelschiene 13 aufgesetzt beziehungsweise auf dieser montiert werden.

Weiterhin ist bei dem dargestellten Schaltschranksystem auch der Abstand zwischen der ersten/zweiten Quaderkante C, D und einem nächstgelegenen und dazu parallelen die erste/zweite Quaderfläche A, B berührenden Rahmenprofil 16, 17 wenigstens so groß wie die Breite/Höhe des Verbindungselements 14. Dies ist eine weitere vorteilhafte Variante, um ein Verbindungselement 14 gut von der Außenseite des Schaltschranks 1a, 1b her zugänglich zu machen, sodass dieses leicht auf eine Stromsammelschiene 13 aufgesetzt beziehungsweise auf dieser montiert werden kann.

Günstig ist es dabei, wenn das der ersten/zweiten Quaderkante C, D nächst liegende dazu parallele Rahmenprofil 4, 8, 16, 17 zumindest 5 cm, bevorzugt zumindest 10 cm und weiter bevorzugt zumindest 20 cm von der ersten/zweiten Quaderkante C, D respektive der ersten/zweiten Quaderfläche A, B beabstandet ist. Auf diese Weise ist der Zugang zur Verbindungsstelle der Stromsammelschienen 13 mit einem Werkzeug beziehungsweise mit einer Hand gut möglich.

In der Darstellung der Fig. 1 sind die Stromsammelschienen 13 normal auf die erste/zweite Quaderfläche A, B ausgerichtet sind. Dadurch wird insbesondere die Aneinanderreihung von mehreren Schaltschränken 1a, 1b weiter erleichtert.

Schließlich weist der Schaltschrank 1a, 1b in dem dargestellten Beispiel eine Vielzahl an Stromsammelschienen 13 auf, die von einem normal zu den Stromsammelschienen 13 ausgerichteten Stromschienenhalter 18 gehalten werden, welcher mit dem der ersten/zweiten Quaderkante C, D nächstgelegenen dazu parallelen Rahmenprofil 4, 8, 16, 17 verbunden ist. Denkbar wäre aber auch, dass der Stromschienenhalter 18 durch ein Rahmenprofil 4, 8, 16, 17 gebildet ist, der Stromschienenhalter 18 und das betreffende Rahmenprofil 4, 8, 16, 17 also einteilig ausgeführt sind. Durch die vorgeschlagenen Maßnahmen wird der Schaltschrank 1a, 1b besonders stabil. Wenn der Stromschienenhalter 18 von einem Rahmenprofil 4, 8, 16, 17 gebildet ist, ergibt sich zudem ein Doppelnutzen der Rahmenprofile 4, 8, 16, 17.

Die in den Fig. 1 bis Fig. 3 dargestellten Schaltschränke 1a, 1b sind aus Gründen der Übersichtlichkeit bis auf die Stromsammelschienen 13 ohne Innenleben und auch ohne Verkleidung respektive Türen dargestellt. Wenngleich die dargestellten Anordnungen die Grundzüge eines Schaltschranks erfüllen, ist es selbstverständlich möglich, dass die Schaltschränke 1a, 1b mit elektrischen Geräten (z.B. Schütze, Steuerungen, etc.) sowie mit einer Verkleidung und mit Türen ausgestattet sind. Vorzugsweise wird die obere Verkleidung erst nach dem Aufstellen der Schaltschränke 1a, 1b und nach dem Verbinden der Stromsammelschienen 13 angebracht, beziehungsweise kann diese zu diesem Zweck vorzugsweise demontiert werden.

Bei dem dargestellten Schaltschrank 1a verlaufen die Stromsammelschienen 13 im oberen Bereich des Schaltschranks 1a von links nach rechts. Je nach Anwendungsfall können die Stromsammelschienen 13 aber auch anders angeordnet sein, beispielsweise von vorne nach hinten oder vertikal verlaufen. Die erste und die zweite Quaderfläche A, B werden also nicht notwendigerweise durch die Seitenflächen des Schaltschranks 1a gebildet, sondern können auch durch die Rück- und die Frontfläche respektive durch die Deckfläche (das Dach) und auch Bodenfläche gebildet sein.

Bei dem dargestellten Schaltschrank 1a ist der Rahmen durch im Wesentlichen zwölf Rahmenprofile 1..12 gebildet. Selbstverständlich können zur Versteifung des Rahmens noch weiter Rahmenprofile vorgesehen sein. Weiterhin verlaufen die Rahmenprofile 1..12 nicht notwendigerweise parallel zu einer Quaderkante sondern können auch schräg angeordnet sein und insbesondere diagonal im Rahmen verlaufen.

Weiterhin ist der Schaltschrank 1a spiegelsymmetrisch bezüglich einer zu den Quaderflächen A, B parallelen Ebene. Auch dies ist nicht zwingend notwendig. Der Schaltschrank 1a kann auch asymmetrisch aufgebaut sein, beziehungsweise auch einen höheren Symmetriegrad aufweisen als dargestellt.

Der durch die spezielle Anordnung der Rahmenprofile 4, 8, 16, 17 entstehende Freiraum dient darüber hinaus nicht notwendigerweise lediglich der Montage der Verbindungsplatten 14. Beispielsweise kann dadurch auch der Zugang zu anderen Bedien- und Funktionselementen des Schaltschranks 1a ermöglicht beziehungsweise erleichtert werden. Insbesondere kann auf diese Weise auch die Kontrolle und Wartung von Schraubverbindungen, Überprüfungen wie Temperaturprüfungen, Inspektion mit bildgebenden Verfahren, etc. ermöglicht beziehungsweise erleichtert werden. Schließlich kann der entstandene Freiraum auch zur Wärmeabfuhr, speziell auch zur Luftzirkulation, genutzt werden. Dabei ist es insbesondere möglich, dass eine an den Freiraum angrenzende Verkleidung ausgespart ist oder Durchbrüche aufweist.

An dieser Stelle wird angemerkt, dass die spezielle Anordnung der Rahmenprofile 4, 8, 16, 17 zwar vorteilhaft ist, jedoch nicht die einzig denkbare Möglichkeit darstellt. Denkbar ist beispielsweise auch, die Rahmenprofile 1,3 beziehungsweise 5, 7 nach innen zu versetzen, um den Zugang zur Verbindungsstelle der Stromsammelschienen 13 weiter zu vereinfachen.

Weiterhin wird angemerkt, dass der Grundrahmen 15 lediglich optional ist. In diesem Beispiel bildet er mit den Rahmenprofilen 2, 6, 11 und 12 die bodenseitige Quaderfläche des Schaltschranks 1a. Die zu den Quaderkanten der Bodenfläche parallelen Rahmenprofile sind also jeweils zweiteilig ausgeführt. Selbstverständlich ist es auch möglich, die betreffenden Rahmenprofile einteilig auszuführen. Schließlich ist es auch möglich, den Grundrahmen 15 gedanklich vom Schaltschrank 1a zu trennen, sodass dessen quaderförmige Außenfläche durch die Rahmenprofile 1..12 sowie 16 und 17 gebildet ist. Der Grundrahmen 15 wird bei dieser Betrachtungsweise somit als außerhalb der Außenfläche angeordnet angesehen. An den Vorteilen der speziellen Anordnung der Rahmenprofile 4, 8, 16 und 17 ändert diese geänderte Betrachtungsweise selbstverständlich nichts.

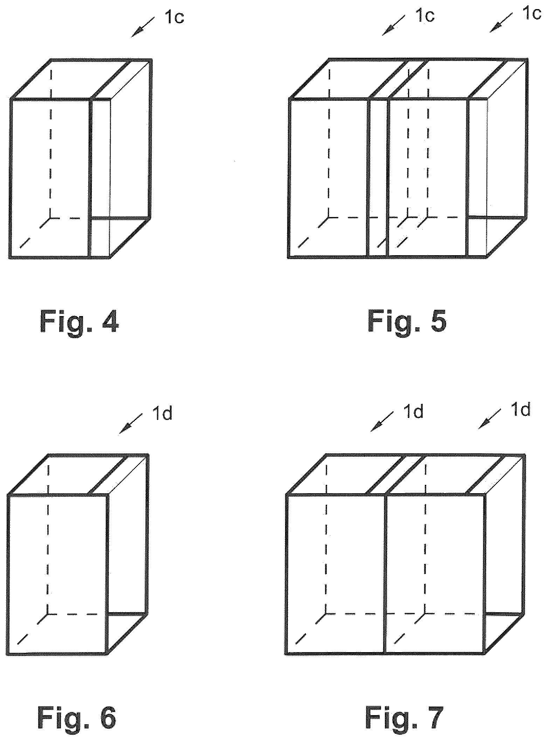

In den Figuren 4 bis 11 werden nun einige illustrative Beispiele präsentiert, die mögliche Ausgestaltungen eines Schaltschranks mit einer im Wesentlichen quaderförmiger Außenkontur zeigen. In den dargestellten Beispielen sind an den Seitenflächen des jeweiligen Quaders teilweise Verkleidungen respektive Türen angeordnet, um deutlich zu machen, dass der Zugang in das Schaltschrankinnere auch dann noch gewährleist wird, wenn die Schaltschränke aneinandergereiht werden.

Fig. 4 zeigt dazu eine Schemadarstellung eines Schaltschranks 1c mit zwei auf einer Seite (hier der rechten Seite) nach innen versetzten Rahmenprofilen von schräg hinten. Wie der Fig. 5 gut zu entnehmen ist, welche zwei miteinander verbundene Schaltschränke gemäß Fig. 4 zeigt, kann auf diese Weise der Zugang in das Schaltschrankinnere über die Oberseite des Schaltschranks 1c und dessen Rückseite ermöglicht werden. Selbstverständlich könnten die Rahmenprofile nicht nur auf der rechten Seite, sondern auch beidseits nach innen versetzt sein.

Fig. 6 zeigt eine Schemadarstellung eines Schaltschranks 1d mit einem auf einer Seite (hier der Oberseite) nach innen versetzten Rahmenprofil. Fig. 7 zeigt wiederum zwei miteinander verbundene Schaltschränke 1d gemäß Fig. 6. Der Zugang in das Schaltschrankinnere wird in diesem Beispiel über die Oberseite ermöglicht.

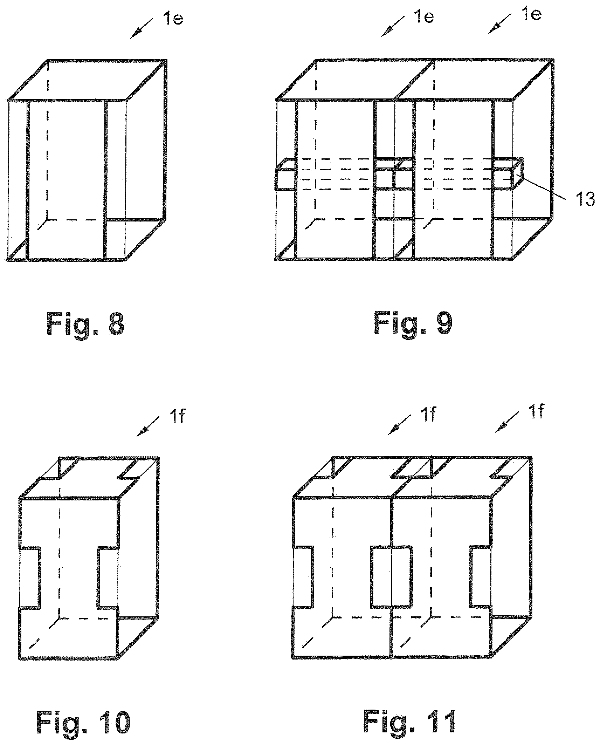

Fig. 8 zeigt eine Schemadarstellung eines Schaltschranks 1e mit beidseitig nach innen versetzten Rahmenprofilen von schräg hinten. Fig. 9 zeigt wiederum zwei miteinander verbundene Schaltschränke 1e gemäß Fig. 8. Gut zu sehen ist der Fig. 9 der rückwärtige Zugang zur Stromsammelschiene 13, die in diesem Beispiel im Schaltschrank 1e hinten angeordnet ist.

Fig. 10 zeigt schließlich eine Schemadarstellung eines Schaltschranks 1f mit abgewinkelten und teilweise nach innen versetzten Rahmenprofilen. Aus der Fig. 11, welche zwei miteinander verbundene Schaltschränke gemäß Fig. 10 zeigt, wird deutlich, dass auf diese Weise Zugänge in das Schaltschrankinnere ermöglicht werden, welche sich nicht notwendigerweise über die gesamte Länge einer Quaderkante erstrecken.

Abschließend wird angemerkt, dass die Schaltschränke 1a, 1b nicht notwendigerweise maßstäblich dargestellt sind und daher auch andere Proportionen aufweisen können. Weiterhin können die Schaltschränke 1a, 1b auch mehr oder weniger Bauteile als dargestellt umfassen. Lageangaben (z.B. "oben", "unten", "links", "rechts", etc.) sind auf die jeweils beschriebene Figur bezogen und sind bei einer Lageänderung der die Schaltschränke 1a, 1b sinngemäß an die neue Lage anzupassen. Schließlich wird angemerkt, dass sich die obigen Ausgestaltungen und Weiterbildungen der Erfindung auf beliebige Art und Weise kombinieren lassen.

## Patentansprüche

1. Schaltschrank (1a..1f) mit einer im Wesentlichen quaderförmiger Außenkontur, umfassend:
- einen in den besagten Quader eingeschriebenen Rahmen, welcher mehrere Rahmenprofile (1..12, 16, 17) umfasst, und
- eine innerhalb des Rahmens zu wenigstens einer von ersten Quaderkanten begrenzten ersten Quaderfläche (A) verlaufende Stromsammelschiene (13), wobei
zumindest eine erste Quaderkante (C) existiert, von der alle Rahmenprofile (1..12, 16, 17) zumindest teilweise quer beabstandet sind,
**dadurch gekennzeichnet, dass**
eine Vielzahl an Stromsammelschienen (13) von einem quer zu den Stromsammelschienen (13) ausgerichteten Stromschienenhalter (18) gehalten werden, welcher mit dem der zumindest einen ersten/zweiten Quaderkante (C, D) nächstgelegenen Rahmenprofil (4, 8, 16, 17) verbunden ist oder durch dieses gebildet ist.

2. Schaltschrank (1a..1f) nach Anspruch 1, **dadurch gekennzeichnet, dass** je ein Rahmenprofil (1..12, 16, 17) parallel zu je einer Quaderkante ausgerichtet ist oder diese bildet beziehungsweise berührt.

3. Schaltschrank (1a..1f) nach Anspruch 1 oder 2, **dadurch gekennzeichnet, dass** die Stromsammelschiene (13) zwischen der ersten Quaderfläche (A) und einer von zweiten Quaderkanten begrenzten zweiten Quaderfläche (B) verläuft, wobei zumindest eine zweite Quaderkante (D) existiert, von der alle Rahmenprofile (1..12, 16, 17) zumindest teilweise quer beabstandet sind.

4. Schaltschrank (1a..1f) nach einem der Ansprüche 1 bis 3 **dadurch gekennzeichnet, dass** das der zumindest einen ersten/zweiten Quaderkante (C, D) nächst liegende Rahmenprofil (4, 8) auch von der ersten/zweiten Quaderfläche (A, B) beabstandet ist.

5. Schaltschrank (1a..1f) nach einem der Ansprüche 1 bis 4, **dadurch gekennzeichnet, dass** das der zumindest einen ersten/zweiten Quaderkante (C, D) nächst liegende Rahmenprofil (4, 8. 16. 17) zumindest 5 cm von der ersten/zweiten Quaderkante (C, D) respektive der ersten/zweiten Quaderfläche (A, B) beabstandet ist.

6. Schaltschrank (1a..1f) nach einem der Ansprüche 1 bis 5, **dadurch gekennzeichnet, dass** die Stromsammelschiene (13) normal auf die erste/zweite Quaderfläche (A. B) ausgerichtet ist.

7. Schaltschranksystem, umfassend einen Schaltschrank (1a..1f) nach einem der Ansprüche 1 bis 6, **gekennzeichnet durch** wenigstens ein Verbindungselement (14), das zur Montage auf einer Stromsammelschiene (13) eingerichtet ist, wobei der Abstand zwischen der zumindest einen ersten/zweiten Quaderkante (C, D) und dem nächstgelegenen die erste/zweite Quaderfläche (A, B) berührenden Rahmenprofil (16, 17) wenigstens so groß ist wie die Breite/Höhe des Verbindungselements (14).

8. Schaltschranksystem, umfassend einen Schaltschrank (1a..1f) nach einem der Ansprüche 1 bis 6, **gekennzeichnet durch** wenigstens ein Verbindungselement (14), das zur Montage auf einer Stromsammelschiene (13) eingerichtet ist, wobei der Abstand zwischen der zumindest einen ersten/zweiten Quaderkante (C, D) und dem nächstgelegenen von der ersten/zweiten Quaderfläche (A, B) beabstandeten Rahmenprofil (4, 8) wenigstens so groß ist wie die halbe Länge des Verbindungselements (14).

9. Schaltschranksystem nach Anspruch 7 oder 8, **gekennzeichnet durch** einen weiteren Schaltschrank (1a..1f), wobei die Schaltschränke (1a..1f) des Schranksystems dazu eingerichtet sind, an ihren ersten/zweiten Quaderflächen (A, B) verbunden zu werden.

## Claims

1. Control cabinet (1a..1f) with an essentially cuboidal outer contour, comprising:
- a frame, formed in said cuboid, which comprises several frame profiles (1..12, 16, 17), and
- a bus bar (13), inside the frame, running to at least a first rectangular surface (A) limited by first rectangular edges, wherein
there is at least a first rectangular edge (C) from which all frame profiles (1..12, 16, 17) are at least partially diagonally offset,
**characterized in that**
a plurality of bus bars (13) are supported by a bus bar support (18), fitted diagonally to the bus bars (13), which is connected to or made up of the frame profile (4, 8, 16, 17) nearest to the at least one first/second rectangular edge (C, D).

2. Control cabinet (1a..1f) according to claim 1, **characterized in that** each frame profile (1..12, 16, 17) is oriented parallel to a rectangular edge, or makes up or touches this rectangular edge.

3. Control cabinet (1a..1f) according to claim 1 or 2, **characterized in that** the bus bar (13) runs between the first rectangular surface (A) and a second rectangular surface (B) limited by second rectangular edges, wherein there is at least a second rectangular edge (D) from which all frame profiles (1..12, 16, 17) are at least partially diagonally offset.

4. Control cabinet (1a..1f) according to any of claims 1 to 3, **characterized in that** the frame profile (4, 8) located nearest to the at least one first/second rectangular edge (C, D) is also offset from the first/second rectangular surface (A, B).

5. Control cabinet (1a..1f) according to any of claims 1 to 4, **characterized in that** the frame profile (4, 8. 16. 17) located nearest to the at least one first/second rectangular edge (C, D) is offset by at least 5 cm from the first/second rectangular edge (C, D) or the first/second rectangular surface (A, B), respectively.

6. Control cabinet (1a..1f) according to any of claims 1 to 5, **characterized in that** the bus bar (13) is normal to the first/second rectangular surface (A. B).

7. Control cabinet system, comprising a control cabinet (1a..1f) according to any of claims 1 to 6, **characterized by** at least one connecting component (14) configured for assembly on a bus bar (13), wherein the distance between the at least one first/second rectangular edge (C, D) and the nearest frame profile (16, 17) touching the first/second rectangular surface (A, B) is at least as large as the width/height of the connecting component (14).

8. Control cabinet system, comprising a control cabinet (1a..1f) according to any of claims 1 to 6, **characterized by** at least one connecting component (14) configured for assembly on a bus bar (13), wherein the distance between the at least one first/second rectangular edge (C, D) and the nearest frame profile (4, 8) offset from the first/second rectangular surface (A, B) is at least as large as half the length of the connecting component (14).

9. Control cabinet system according to claim 7 or 8, **characterized by** a further control cabinet (1a..1f), wherein the control cabinets (1a..1f) of the cabinet system are configured to be connected at their first/second rectangular surfaces (A, B).

## Revendications

1. Armoire électrique (1a à 1f) ayant un contour extérieur globalement parallélépipédique, comprenant :
- un cadre qui est inscrit dans ledit parallélépipède et qui comprend plusieurs profilés de cadre (1 à 12, 16, 17), et
- une barre conductrice (13) qui s'étend à l'intérieur du cadre vers au moins une première face de parallélépipède (A) délimitée par des premières arêtes de parallélépipède,
dans laquelle il existe au moins une première arête de parallélépipède (C) de laquelle tous les profilés de cadre (1 à 12, 16, 17) sont distants transversalement au moins en partie,
**caractérisée en ce que** plusieurs barres conductrices (13) sont maintenues par un support de barre conductrice (18) qui est orienté transversalement par rapport aux barres conductrices (13) et qui est relié au profilé de cadre (4, 8, 16, 17) le plus proche d'au moins une première/deuxième arête de parallélépipède (C, D) ou qui est formé par celui-ci.

2. Armoire électrique (1a à 1f) selon la revendication 1, **caractérisée en ce que**, à chaque fois, un profilé de cadre (1 à 12, 16, 17) est orienté parallèlement à une arête de parallélépipède respective ou forme celle-ci ou la touche.

3. Armoire électrique (1a à 1f) selon la revendication 1 ou 2, **caractérisée en ce que** la barre conductrice (13) s'étend entre la première face de parallélépipède (A) et une deuxième face de parallélépipède (B) délimitée par des deuxièmes arêtes de parallélépipède, sachant qu'il existe au moins une deuxième arête de parallélépipède (D) de laquelle tous les profilés de cadre (1 à 12, 16, 17) sont distants transversalement au moins en partie.

4. Armoire électrique (1a à 1f) selon l'une des revendications 1 à 3, **caractérisée en ce que** le profilé de cadre (4, 8) le plus proche d'au moins une première/deuxième arête de parallélépipède (C, D) est aussi distant de la première/deuxième face de parallélépipède (A, B).

5. Armoire électrique (1a à 1f) selon l'une des revendications 1 à 4, **caractérisée en ce que** le profilé de cadre (4, 8. 16. 17) le plus proche d'au moins une première/deuxième arête de parallélépipède (C, D) est distant d'au moins 5 cm de la première/deuxième arête de parallélépipède (C, D) respectivement de la première/deuxième face de parallélépipède (A, B).

6. Armoire électrique (1a à 1f) selon l'une des revendications 1 à 5, **caractérisée en ce que** la barre conductrice (13) est orientée perpendiculairement à la première/deuxième face de parallélépipède (A. B).

7. Système d'armoire électrique, comprenant une armoire électrique (1a à 1f) selon l'une des revendications 1 à 6, **caractérisé par** au moins un élément de liaison (14) qui est conçu pour le montage sur une barre conductrice (13), la distance entre l'au moins une première/deuxième arête de parallélépipède (C, D) et le profilé de cadre (16, 17) le plus proche touchant la première/deuxième face de parallélépipède (A, B) étant au moins aussi grande que la largeur/hauteur de l'élément de liaison (14).

8. Système d'armoire électrique, comprenant une armoire électrique (1a à 1f) selon l'une des revendications 1 à 6, **caractérisé par** au moins un élément de liaison (14) qui est conçu pour le montage sur une barre conductrice (13), la distance entre l'au moins une première/deuxième arête de parallélépipède (C, D) et le profilé de cadre (4, 8) le plus proche distant de la première/deuxième face de parallélépipède (A, B) étant au moins aussi grande que la moitié de la longueur de l'élément de liaison (14).

9. Système d'armoire électrique selon la revendication 7 ou 8, **caractérisé par** une autre armoire électrique (1a à 1f), les armoires électriques (1a à 1f) du système d'armoire étant conçues pour être reliées sur leurs premières/deuxièmes faces de parallélépipède (A, B).
